# EUROPÄISCHE PATENTANMELDUNG

(11) **EP 3 957 412 A1**
(43) Veröffentlichungstag der Anmeldung: **23.02.2022**
(21) Anmeldenummer: 20191971.9
(22) Anmeldetag: 20.08.2020
(51) Int. Cl.: B21D 51/26, B23B 31/00, B23Q 3/06, B25B 5/00, B25J 15/00, B65G 47/90, F16B 2/06

(54) **GREIFEINRICHTUNG, GREIFAUFNAHME UND GREIFSYSTEM**

(71) Anmelder: HINTERKOPF GmbH, 73054 Eislingen/Fils (DE)
(72) Erfinder: Wahl, Thomas, 73035 Jebenhausen (DE)
(74) Vertreter: Patentanwälte Magenbauer & Kollegen Partnerschaft mbB

(57) **Zusammenfassung**

Die Erfindung betrifft eine Greifeinrichtung (1) mit einem Grundkörper (2), der längs einer Mittelachse (3) von einer zylindrischen Ausnehmung (14) durchsetzt ist, sowie mit einer in der Ausnehmung (14) aufgenommenen und längs der Mittelachse (3) erstreckten Spannhülse (9), die in einer quer zur Mittelachse (3) ausgerichteten Radialrichtung zwischen einer Dosenfreigabestellung und einer Doseneinspannstellung elastisch deformierbar ausgebildet ist, mit einem Klemmkörper (10), der entlang eines Klemmweges (53) zwischen einer Freigabestellung und einer Klemmstellung beweglich an einer Führungsoberfläche (40) des Grundkörpers (2) gelagert ist und der an einer Innenoberfläche (47) mit wenigstens einer Steuerfläche (51) versehen ist, die längs des Klemmweges (53) in der Richtung der Klemmstellung einen abnehmenden Abstand (54) zur Mittelachse (3) aufweist, wobei der Grundkörper (2) von mehreren quer zur Mittelachse (3) ausgerichteten Ausnehmungen (35) durchsetzt ist, in denen jeweils ein Druckkörper (36) angeordnet ist, der jeweils an der Steuerfläche (51) und an einer Außenoberfläche der Spannhülse (9) anliegt.

## Beschreibung

Die Erfindung betrifft eine Greifeinrichtung, eine Greifaufnahme und ein Greifsystem.

Aus der EP 2 364 792 A1 ist eine Umformeinrichtung für becherförmige Hohlkörper bekannt, die ein Maschinengestell, eine Antriebseinrichtung, einen Werkstückrundtisch und einen Werkzeugträger zur Aufnahme von Bearbeitungswerkzeugen umfasst, wobei sich der Werkstückrundtisch und der Werkzeugträger gegenüberliegen und um eine Drehachse zueinander verdrehbar sowie längs der Drehachse zueinander linearverstellbar sind und wobei die Antriebseinrichtung zur Bereitstellung einer Drehschrittbewegung und einer zyklischen Linearbewegung zwischen Werkstückrundtisch und Werkzeugträger ausgebildet ist, um eine Umformung der Hohlkörper mittels der Bearbeitungswerkzeuge in mehreren aufeinanderfolgenden Bearbeitungsschritten zu ermöglichen. Dem Werkstückrundtisch sind Werkstückhalter zugeordnet, die jeweils eine Ausnehmung zur Aufnahme eines Hohlkörpers mit einem die Ausnehmung bereichsweise begrenzenden Wandabschnitt aufweisen, wobei der Wandabschnitt eine zur Verengung des Querschnitts der Ausnehmung ausgebildete, einstellbare Geometrie aufweist, um eine Festlegung des Hohlkörpers am Werkstückhalter zu ermöglichen, wobei der Wandabschnitt von einer flexiblen Membran gebildet wird, die einen im Werkstückhalter ausgebildeten Fluidkanal bereichsweise begrenzt.

Die Aufgabe der Erfindung besteht darin, eine Greifeinrichtung, eine Greifaufnahme und ein Greifsystem mit vereinfachtem Aufbau bereitzustellen.

Diese Aufgabe wird für eine Greifeinrichtung zum Greifen von dünnwandigen Aerosoldosenrohlingen mit folgenden Merkmalen gelöst: die Greifeinrichtung umfasst einen Grundkörper, der längs einer Mittelachse von einer zylindrischen, insbesondere kreiszylindrischen, Ausnehmung durchsetzt ist, sowie eine in der Ausnehmung aufgenommenen und längs der Mittelachse erstreckten Spannhülse, die in einer quer zur Mittelachse ausgerichteten Radialrichtung zwischen einer Dosenfreigabestellung und einer Doseneinspannstellung elastisch deformierbar ausgebildet ist, und einen Klemmkörper, der entlang eines Klemmweges zwischen einer Freigabestellung und einer Klemmstellung beweglich an einer Führungsoberfläche des Grundkörpers gelagert ist und der an einer Innenoberfläche mit wenigstens einer Steuerfläche versehen ist, die längs des Klemmweges in der Richtung der Klemmstellung einen abnehmenden Abstand zur Mittelachse aufweist, wobei der Grundkörper von mehreren quer zur Mittelachse ausgerichteten Ausnehmungen durchsetzt ist, in denen jeweils ein Druckkörper angeordnet ist, der jeweils an der Steuerfläche und an einer Außenoberfläche der Spannhülse anliegt.

Der Grundkörper bildet die Trägerstruktur für die Greifeinrichtung und überträgt die zur Festlegung des Aerosoldosenrohlings erforderlichen Kraftflüsse zwischen dem Aerosoldosenrohling und einer Greifaufnahme, die ihrerseits beispielsweise mit einem Werkstückrundtisch verbunden sein kann. Dementsprechend sind am Grundkörper sowohl die Spannhülse als auch der Klemmkörper jeweils relativbeweglich angeordnet. Hier ist vorgesehen, dass der Klemmkörper an einer Führungsoberfläche des Grundkörpers beweglich gelagert ist. Ferner ist vorgesehen, dass die Spannhülse in der kreiszylindrischen Ausnehmung im Grundkörper in axialer Richtung zwischen zwei jeweils endseitig der Ausnehmung zugeordneten, insbesondere ringförmig ausgebildeten, Vorsprüngen aufgenommen ist, wobei ein Abstand der Vorsprünge größer als eine axiale Erstreckung der Spannhülse gewählt werden kann. Dennoch gewährleistet jeder der axialen Vorsprünge jeweils in einer parallel zur Mittelachse ausgerichteten Richtung eine formschlüssig wirkende Bewegungsbegrenzung für die Spannhülse.

Die Spannhülse hat die Aufgabe, eine möglichst homogene Krafteinleitung von der Greifeinrichtung auf eine, insbesondere kreiszylindrisch ausgebildete, Außenoberfläche des Aerosoldosenrohlings zu gewährleisten, um lokale Kraftspitzen zwischen der Greifeinrichtung und dem Aerosoldosenrohling zu vermeiden, die gegebenenfalls zu Beschädigungen des Aerosoldosenrohlings führen könnten. Vorzugsweise ist die Spannhülse derart beschaffen und auf die übrigen Komponenten der Greifeinrichtung abgestimmt, dass in der Doseneinspannstellung eine zumindest weitgehend konstante Flächenpressung zwischen der Spannhülse und dem Aerosoldosenrohling gewährleistet ist. Durch diese Maßnahmen wird eine Einleitung von Normalkräften von der Spannhülse auf den Aerosoldosenrohling erreicht, so dass Reibkräfte zwischen Spannhülse und Aerosoldosenrohling, die von den Normalkräften und einem Reibungskoeffizienten, der von der Materialpaarung Spannhülse/Aerosoldosenrohling abhängt, eine axiale Festlegung des Aerosoldosenrohlings in der Greifeinrichtung gewährleisten. Vorzugsweise sind die Normalkräfte und die in Abhängigkeit vom Reibungskoeffizienten daraus resultierenden Reibkräfte so bemessen, dass einerseits eine Beschädigung des Aerosoldosenrohlings durch die Spannhülse vermieden wird und andererseits der Aerosoldosenrohling bei der Durchführung von Deformationsschritten zuverlässig in der Greifeinrichtung aufgenommen ist, wobei hier insbesondere das Abziehen von Deformationswerkzeugen vom Aerosoldosenrohling zu Axialkräften auf den Aerosoldosenrohling führt, die nicht größer als die Reibkräfte werden dürfen.

Der Klemmkörper hat die Aufgabe, die zur Festlegung des Aerosoldosenrohlings erforderlichen Klemmkräfte auf die Spannhülse einzuleiten. Hierzu ist der Klemmkörper längs eines Klemmweges relativbeweglich am Grundkörper aufgenommen. Der Klemmkörper weist an einer Innenoberfläche wenigstens eine Steuerfläche auf. Diese Steuerfläche ist dazu ausgebildet, in Abhängigkeit von einer relativen Lage des Klemmkörpers gegenüber dem Grundkörper zwischen einer Freigabestellung und einer Klemmstellung in einer Richtung quer zur Mittelachse ausgerichtete Drucckräfte auf eine Außenoberfläche der Spannhülse einzuleiten.

Um eine solche von der Position des Klemmkörpers längs des Klemmweges abhängige Krafteinleitung zu ermöglichen, ist die Steuerfläche bezogen auf den Klemmweg in der Art eines Keils ausgebildet. Die Keilform der Steuerfläche kann dadurch beschrieben werden, dass die Steuerfläche längs des Klemmweges in Richtung der Klemmstellung einen abnehmenden Abstand zur Mittelachse aufweist. Dabei kann vorgesehen sein, dass die Steuerfläche eben ausgebildet ist. Alternativ kann die Steuerfläche auch zumindest bereichsweise gekrümmt ausgebildet sein und/oder mehrere ebene Abschnitte aufweisen, die bezogen auf den Klemmweg mit unterschiedlicher Steigung ausgebildet sind.

Vorzugsweise ist in einer Dosenfreigabestellung des Klemmkörpers eine geringe, insbesondere verschwindende, Krafteinleitung vom Klemmkörper auf die Spannhülse vorgesehen. Demgegenüber ist in einer Doseneinspannstellung des Klemmkörpers vorgesehen, dass der Klemmkörper in radialer Richtung nach innen wirkende Kräfte auf die Spannhülse ausübt, um die Spannhülse soweit elastisch zu deformieren, dass sie mit einer vorgebbaren Flächenpressung an der Außenoberfläche des Aerosoldosenrohlings anliegt. Bei Erreichen dieser vorgebbaren Flächenpressung wird durch die von der Spannhülse auf die Außenoberfläche des Aerosoldosenrohlings wirkenden Normalkräfte und den materialpaarungsabhängigen Reibungskoeffizienten zwischen Spannhülse und Aerosoldosenrohling eine reibschlüssige Festlegung des Aerosoldosenrohlings in der Spannhülse bewirkt. Die Spannhülse ist ihrerseits in axialer Richtung längs der Mittelachse vorzugsweise formschlüssig in der kreiszylindrischen Ausnehmung des Grundkörpers aufgenommen, so dass aufgrund der vom Klemmkörper auf die Spannhülse ausgeübten Radialkräfte und der axial formschlüssigen Festlegung der Spannhülse am Grundkörper eine vollständige Fixierung des Aerosoldosenrohlings in allen Raumrichtungen gewährleistet ist.

Um eine vorteilhafte Kraftübertragung zwischen dem Klemmkörper und den daran angeordneten Steuerflächen und der Spannhülse zu gewährleisten, sind am Grundkörper mehrere quer zur Mittelachse ausgerichteten Ausnehmungen vorgesehen. In diesen Ausnehmungen ist jeweils ein Druckkörper angeordnet, der jeweils an einer zugeordneten Steuerfläche des Klemmkörpers sowie an der Außenoberfläche der Spannhülse anliegt. Vorzugsweise ist die Ausnehmung im Grundkörper, die zur Aufnahme des Druckkörpers vorgesehen ist, derart gestaltet, dass der Druckkörper zumindest nahezu ausschließlich, insbesondere ausschließlich, quer zur Mittelachse verlagert werden kann. In allen anderen Raumrichtungen liegt hingegen nur eine geringe, insbesondere eine verschwindende, Relativbeweglichkeit des Druckkörpers gegenüber dem Grundkörper vor. Dem Druckkörper kommt somit die Aufgabe zu, bei einer Relativbewegung des Klemmkörpers und der daran ausgebildeten Steuerfläche längs des Klemmweges zwischen der Freigabestellung und der Klemmstellung die Abstandsänderung der Steuerfläche gegenüber der Mittelachse in eine zumindest nahezu ausschließliche, insbesondere ausschließliche, Linearbewegung quer zur Mittelachse des Grundkörpers umzusetzen und damit die gewünschte Krafteinleitung auf die Spannhülse zu gewährleisten.

Der Klemmweg für den Klemmkörper kann als Gerade, als Kreisbogenabschnitt oder als Wendelabschnitt ausgebildet sein. Dementsprechend führt der Klemmkörper zwischen der Freigabestellung und der Klemmstellung bzw. in entgegengesetzter Richtung entweder eine ausschließliche Linearbewegung oder eine ausschließliche Rotationsbewegung oder eine Überlagerung einer Linearbewegung und einer Rotationsbewegung aus. Es kann auch vorgesehen sein, dass der Klemmweg ausgehend von der Freigabestellung in die Klemmstellung unterschiedlich zum Klemmweg von der Klemmstellung in die Freigabestellung ist.

Die Klemmbewegung für den Klemmkörper, die als Relativbewegung des Klemmkörpers zwischen der Freigabestellung und der Klemmstellung durchgeführt wird und die in einer Reduzierung eines freien Querschnitts der Spannhülse resultiert, erfordert eine Krafteinleitung auf den Klemmkörper. Diese Krafteinleitung kann manuell durch einen Benutzer vorgenommen werden. Bevorzugt ist jedoch vorgesehen, dass diese Krafteinleitung in automatisierter Weise durch einen geeigneten Aktor, beispielsweise einen elektrischen oder pneumatischen Antrieb, vorgenommen wird. Dieser Aktor kann unmittelbar an der Greifeinrichtung angeordnet sein und die Krafteinleitung direkt zwischen dem Grundkörper und dem Klemmkörper bewirken. Alternativ ist vorgesehen, dass der Aktor an einer Greifaufnahme angeordnet ist, die für eine Festlegung der Greifeinrichtung an einem Werkstücktisch, insbesondere einem Werkstückrundtisch einer Einziehmaschine, ausgebildet ist. In Abhängigkeit von einer Gestaltung der Greifeinrichtung kann vorgesehen sein, dass die Relativbewegung des Klemmkörpers gegenüber dem Grundkörper sowohl in Richtung der Klemmstellung als auch in Richtung der Freigabestellung eine aktive Krafteinleitung von außen erfordert. Alternativ kann vorgesehen sein, dass zwischen Klemmkörper und Grundkörper wenigstens ein Energiespeicher, insbesondere in der Art einer Federeinrichtung, angeordnet ist, um eine Rückstellkraft wahlweise in Richtung der Freigabestellung oder in Richtung der Klemmstellung bereitstellen zu können. In diesem Fall ist es ausreichend, wenn der Aktor derart auf die Greifeinrichtung einwirken kann, dass der jeweilige Energiespeicher bei der Relativbewegung des Klemmkörpers gegenüber dem Grundkörper ausgehend von einem niedrigen Energieniveau, beispielsweise einer geringen inneren Federspannung, auf ein höheres Energieniveau, beispielsweise eine hohe innere Federspannung, gebracht wird. Rein exemplarisch kann vorgesehen sein, dass die Greifeinrichtung derart beschaffen ist, dass sie zumindest in eine der beiden Funktionsstellungen (Freigabestellung, Klemmstellung) verriegelt werden kann, um trotz des Vorhandenseins eines Energiespeichers und der vom Energiespeicher bereitgestellten Rückstellkraft ohne fortdauernde äußere Kraftzufuhr die jeweilige Funktionsstellung halten zu können. Sofern die Greifeinrichtung einen Energiespeicher umfasst, ermöglicht diese eine Rückstellung des Klemmkörpers gegenüber dem Grundkörper für den Fall einer Reduzierung einer Betätigungskraft durch den Aktor, insbesondere für den Fall eines Lösens einer Verriegelung.

Bei einer vorteilhaften Weiterbildung der Erfindung ist vorgesehen, dass der Klemmkörper längs der Mittelachse linearbeweglich am Grundkörper gelagert ist und dass der Klemmweg parallel zur Mittelachse ausgerichtet ist. Vorzugsweise ist die Führungsoberfläche des Grundkörpers als zylindrischer, insbesondere kreiszylindrischer, Abschnitt einer Außenoberfläche des Grundkörpers ausgebildet und wird vom Klemmkörper ringförmig umfasst bzw. umgriffen. Hierdurch wird eine kompakte Bauweise für die Greifeinrichtung gewährleistet. Ferner ist hierbei sichergestellt, dass eine Linearführung für den Klemmkörper relativ zum Grundkörper mit einfachen Mitteln verwirklicht werden kann. Findet nunmehr eine Relativbewegung des Klemmkörpers gegenüber dem Grundkörper längs des Klemmweges parallel zur Mittelachse statt, so wird hierdurch eine Relativbewegung der jeweiligen Steuerfläche gegenüber dem zugeordneten Drucckörper bewirkt. Betrachtet man hierbei den Druckkörper, der linearbeweglich in der Ausnehmung des Grundkörpers aufgenommen ist und der dementsprechend in einer quer zur Mittelachse ausgerichteten und den Druckkörper schneidenden Bewegungsebene angeordnet ist, ist eine eindeutige Beziehung zwischen einer Position des Grundkörpers längs eines Bewegungswegs und der Relativbewegung des Klemmkörpers festzustellen. Hierbei wird davon ausgegangen, dass die Steuerfläche mit einer gewissen inneren Vorspannung in die Ausnehmung des Grundkörpers eingesetzt ist und eine radial nach außen gerichtete Druckkraft auf den Druckkörper ausübt. Ferner wird davon ausgegangen, dass ein Abstand einer Schnittlinie zwischen der Bewegungsebene und der Steuerfläche bei einer Relativbewegung des Klemmkörpers aus der Freigabestellung in die Klemmstellung abnimmt, so dass in diesem Zuge eine Verlagerung des Druckkörpers in radialer Richtung nach innen längs des Bewegungswegs in der Bewegungsebene stattfindet.

In weiterer Ausgestaltung der Erfindung ist vorgesehen, dass der Klemmkörper drehbeweglich um die Mittelachse am Grundkörper gelagert ist und dass der Klemmweg einen koaxial zur Mittelachse ausgerichteten Kreisbogenabschnitt umfasst, insbesondere als koaxial zur Mittelachse ausgerichteter Kreisbogenabschnitt ausgebildet ist. Bei einem Klemmweg, der durch eine Rotationsbewegung des Klemmkörpers relativ zum Grundkörper bestimmt wird, kann entweder vorgesehen sein, dass der Klemmweg ausschließlich als koaxial zur Mittelachse ausgerichteter Kreisbogenabschnitt ausgebildet ist oder dass der Klemmweg zusätzlich zu einer parallel zur Mittelachse ausgerichteten Linearbewegungskomponente eine koaxial zur Mittelachse ausgerichtete Kreisbewegungskomponente umfasst und damit wendelförmig ausgebildet ist. In jedem Fall ist vorgesehen, dass aufgrund der Relativbewegung des Klemmkörpers gegenüber dem Grundkörper und der darauf abgestimmten geometrischen Gestaltung der Steuerflächen für den Fall einer Bewegung des Klemmkörpers aus der Freigabestellung in die Klemmstellung eine lineare Relativbewegung des an der Steuerfläche anliegenden Druckkörpers in radialer Richtung nach innen erfolgt.

Vorzugsweise ist die Steuerfläche als zumindest teilweise um die Mittelachse umlaufender Abschnitt eines Kegelmantels ausgebildet. Diese Ausgestaltung der Steuerfläche ermöglicht eine kostengünstige Herstellung, beispielsweise durch Verwendung eines Drehverfahrens zur Bearbeitung der Innenoberfläche des Klemmkörpers. Auf diese Weise kann insbesondere eine umlaufende Steuerfläche geschaffen werden, so dass zumindest im Hinblick auf die Steuerfläche bei einer Montage des Klemmkörpers auf den Grundkörper nicht auf eine Winkellage der beiden Komponenten zueinander geachtet werden muss.

Zweckmäßig ist es, wenn ein Winkel zwischen der Steuerfläche und dem Klemmweg derart gewählt ist, dass für radial nach außen auf die Druckkörper wirkende Kräfte bezüglich des Klemmkörpers Selbsthemmung vorliegt. Bei einer derartigen Gestaltung der Geometrie der Steuerfläche wird vermieden, dass Bearbeitungskräfte, die während einer Bearbeitung auf den Aerosoldosenrohling einwirken und die über die Spannhülse, die Drucckörper, den Klemmkörper und den Grundkörper abgeleitet werden müssen, zu einer unerwünschten Kraftrückwirkung auf den Klemmkörper führen, die eine Spannkraft für den Aerosoldosenrohling in Frage stellen könnten. In der Praxis bedeutet eine selbsthemmende Auslegung für die Steuerfläche, dass eine in radialer Richtung nach außen und quer zur Mittelachse ausgerichtete Kraft, die vom Druckkörper auf die Steuerfläche einwirkt, nicht zu einer Relativbewegung des Klemmkörpers gegenüber dem Grundkörper führt.

Bevorzugt ist vorgesehen, dass mehrere, insbesondere gleichartig ausgebildete, Steuerflächen in axialer Richtung beabstandet längs der Mittelachse an der Innenoberfläche des Klemmkörpers angeordnet sind. Hierdurch wird bei Verwendung einer entsprechenden Anzahl von Druckkörpern eine gleichmäßige Krafteinleitung vom Klemmkörper auf die Spannhülse ermöglicht. Beispielhaft kann vorgesehen sein, dass die Druckkörper in Ausnehmungen des Grundkörpers aufgenommen sind, die in mehreren jeweils quer zur Mittelachse ausgerichteten und mit gleicher Teilung voneinander beabstandeten Ebenen angeordnet sind. Bevorzugt ist vorgesehen, dass die Ausnehmungen für die Drucckörper in der jeweiligen Ebene in gleicher Winkelteilung angeordnet sind. Gegebenenfalls kann vorgesehen sein, dass Ausnehmungen, die in benachbart zueinander angeordneten Ebenen angeordnet sind, um eine halbe Winkelteilung versetzt zueinander angeordnet sind, um eine möglichst gleichmäßige Krafteinleitung auf die Spannhülse zu gewährleisten.

In weiterer Ausgestaltung der Erfindung ist vorgesehen, dass die Spannhülse aus einem federelastischen, insbesondere innenseitig mit Kunststoff beschichteten, Metallmaterial hergestellt ist und von einem Schlitz durchsetzt ist, der sich, insbesondere parallel zur Mittelachse, von einer ersten axialen Stirnfläche der Spannhülse zu einer zweiten axialen Stirnfläche der Spannhülse erstreckt. Die Hauptaufgabe der Spannhülse liegt darin, eine flächige Kraftverteilung für den Aerosoldosenrohling und eine Einleitung von ausreichend großen Normalkräften auf den Aerosoldosenrohling zu gewährleisten, wenngleich die Krafteinleitung für die Spannhülse, die durch die Druckkörper erfolgt, jeweils allenfalls mit einer kleinen Berührfläche stattfindet. Dies ist insbesondere der Fall, wenn die Druckkörper kugelförmig oder kreiszylindrisch ausgebildet sind. Der Schlitz in der Spannhülse kann geradlinig von einer ersten axialen Stirnfläche bis zu einer zweiten axialen Stirnfläche der Spannhülse verlaufen. Alternativ kann der Schlitz auch schräg zur Mittelachse ausgerichtet sein oder zumindest abschnittsweise gekrümmt, insbesondere mäanderförmig, ausgebildet sein.

Zweckmäßig ist es, wenn ein Außendurchmesser der Spannhülse größer als ein Innendurchmesser der zylindrischen Ausnehmung des Grundkörpers ist, so dass die Spannhülse mit einer inneren Radialvorspannung in der zylindrischen Ausnehmung des Grundkörpers aufgenommen ist. In diesem Fall ist zur Montage der Spannhülse in die zylindrische Ausnehmung des Grundkörpers die Aufbringung einer radial nach innen gerichteten Kraft auf die Spannhülse erforderlich, damit eine Reduktion des Außendurchmessers der Spannhülse durch elastische Deformation hervorgerufen werden kann und die Spannhülse nach der Montage in die Ausnehmung aufgrund der inneren Eigenspannungen an der Innenoberfläche der Ausnehmung anliegt und ohne eine Krafteinwirkung der Druckkörper einen maximalen freien Querschnitt für die Aufnahme eines Aerosoldosenrohlings gewährleistet.

Bei einer vorteilhaften Weiterbildung der Erfindung ist vorgesehen, dass die Druckkörper kugelförmig ausgebildet sind und dass die quer zur Mittelachse ausgerichteten Ausnehmungen im Grundkörper in einem radial innenliegenden Bereich einen kleineren Durchmesser als die Druckkörper aufweisen. Durch die Gestaltung der Ausnehmungen mit einem in radialer Richtung nach innen verkleinerten Durchmesser wird vermieden, dass die Druckkörper im Fall einer Entfernung der Spannhülse nach innen in die Ausnehmung des Grundkörpers fallen können. Ein entfernen der Spannhülse kann beispielsweise vorgesehen sein, um eine vorhandene Spannhülse durch eine für den aufzunehmenden Aerosoldosenrohling besser geeignete Spannhülse zu ersetzen. Insbesondere kann vorgesehen sein, die Spannhülse in einem regelmäßigen zeitlichen Zyklus zu ersetzen, um eventuelle Verschleißerscheinungen an der Innenoberfläche, die zur Beschädigung des aufzunehmenden Aerosoldosenrohlings führen könnten, zu vermeiden.

Bevorzugt ist vorgesehen, dass an der Innenoberfläche des Klemmkörpers und an der Führungsoberfläche des Grundkörpers mehrere jeweils längs des Klemmweges erstreckte und zueinander korrespondierende Führungsnuten ausgebildet sind, in denen Wälzkörper aufgenommen sind, um eine Wälzlagerung zwischen dem Klemmkörper und dem Grundkörper auszubilden. Durch diese Wälzlagerung wird eine hoch belastbare und präzise Lagerung des Klemmkörpers gegenüber dem Grundkörper gewährleistet. Dies ist insbesondere aus dem Grund von Interesse, dass für die Krafteinleitung auf die Spannhülse erhebliche Axialkräfte auf den Klemmkörper aufgebracht werden müssen, die ohne eine geeignete Lagerung des Klemmkörpers gegenüber dem Grundkörper zu einer unerwünschten Verkippung des Klemmkörpers relativ zum Grundkörper und damit zur Beschädigung der Greifeinrichtung und/oder des Aerosoldosenrohlings führen könnten. Darüber hinaus wird durch die Wälzlagerung eine Rotationsbewegung des Klemmkörpers gegenüber dem Grundkörper verhindert, so dass eine unerwünschte Entriegelung des Grundkörpers aus der Greifaufnahme unterbunden wird. Vorzugsweise ist vorgesehen, dass die Wälzlagerung für eine linearbewegliche Aufnahme des Klemmkörpers am Grundkörper für eine Relativbewegung parallel zur Mittelachse des Grundkörpers ausgebildet ist.

In weiterer Ausgestaltung der Erfindung ist vorgesehen, dass der Grundkörper an einem ersten Endbereich einen, insbesondere frei drehbar in der Ausnehmung gelagerten, Stützring aufweist, der einen ersten Ringabschnitt mit einem ersten Innendurchmesser aufweist, wobei der erste Innendurchmesser einem Außendurchmesser des zu greifenden Aerosoldosenrohlings entspricht und der einen zweiten Ringabschnitt mit einem zweiten Innendurchmesser aufweist, der kleiner als der erste Innendurchmesser ist. Die Aufgabe des Stützrings besteht darin, den Aerosoldosenrohling bodenseitig abzustützen, damit dieser in axialer Richtung längs der Mittelachse mit Bearbeitungskräften beaufschlagt werden kann, wie dies beispielsweise bei der Durchführung eines Einziehvorgangs am Aerosoldosenrohling der Fall ist. Die ringförmige Ausgestaltung des Stützrings ermöglicht eine Durchführung eines Bodenformvorgangs für den Dosenboden, bei dem der zunächst eben ausgebildete Dosenboden durch Einwirkung eines Bodenformstößels eine konkave Geometrie erhält. Besonders vorteilhaft ist es, wenn der Stützring drehbar im Grundkörper gelagert ist, da hiermit eine Rotation des in der Greifeinrichtung aufgenommenen Aerosoldosenrohlings bei geöffneter Spannhülse erleichtert wird, wie sie beispielsweise für eine rotatorische Positionierung des Aerosoldosenrohlings vorgenommen werden kann.

Vorteilhaft ist es, wenn der Grundkörper an einem dem ersten Endbereich abgewandten zweiten Endbereich einen Zentrierring aufweist, der in Richtung des ersten Endbereichs kegelabschnittsförmig verjüngt ausgebildet ist und der angrenzend an die Ausnehmung einen minimalen Innendurchmesser aufweist, der zumindest im Wesentlichen einem Außendurchmesser des zu greifenden Aerosoldosenrohlings entspricht. Mit dem Zentrierring wird eine Zuführung des Aerosoldosenrohlings in die Spannhülse erleichtert, wobei der Zentrierring eine mittige Ausrichtung des Aerosoldosenrohlings gegenüber der Spannhülse unterstützt.

Die Aufgabe der Erfindung wird auch durch eine Greifaufnahme, die zur Kopplung mit einer Greifeinrichtung ausgebildet ist, gelöst. Hierbei umfasst die Greifaufnahme einen Koppelkörper, der zur Kopplung mit einem Werkstückrundtisch ausgebildet ist und der eine koaxial zu einer Mittelachse ausgebildete kreiszylindrische Außenoberfläche aufweist, an der ein längs der Mittelachse linearbeweglicher Ringkolben abdichtend anliegt, der mit einem koaxial zur Mittelachse und axial von der Außenoberfläche entfernt angeordneten Hülsenabschnitt verbunden ist und der mit einem am Koppelkörper festgelegten und abdichtend an einer Innenoberfläche des Hülsenabschnitts anliegenden Druckring einen größenvariablen Arbeitsraum bestimmt, wobei an einem dem Ringkolben abgewandten Endbereich des Hülsenabschnitts zwei gegenüberliegend angeordnete Riegelklauen angeordnet sind, die jeweils mit einer umlaufenden, koaxial zur Mittelachse ausgerichteten Riegelnut versehen sind, wobei der Koppelkörper von einer längs der Mittelachse erstreckten, kreiszylindrischen Aufnahmebohrung durchsetzt ist, die zur Aufnahme eines Abschnitts der Greifeinrichtung ausgebildet ist, wobei an einer Innenoberfläche der Aufnahmebohrung wenigstens ein in radialer Richtung nach innen abragender, kreisringförmiger Verriegelungsvorsprung zur Verriegelung der Greifeinrichtung ausgebildet ist.

Die Greifaufnahme bildet das Bindeglied zwischen der Greifeinrichtung und einem Werkstücktisch, insbesondere einem Werkstückrundtisch einer Einziehmaschine. Vorzugsweise ist die Greifaufnahme derart auf die Greifeinrichtung abgestimmt, dass ein schneller Austausch der Greifeinrichtung vorgenommen werden kann, wenn beispielsweise eine Umrüstung einer mit derartigen Greifaufnahmen und Greifeinrichtungen versehenen Einziehmaschine von einem ersten Dosenformat auf ein zweites, abweichend ausgebildetes Dosenformat vorgenommen werden soll. Ferner ist die Greifaufnahme zur Einleitung der Klemmkraft auf die Greifeinrichtung ausgebildet und umfasst hier zu einen integrierten Aktor, der mit Hilfe eines druckbeaufschlagten Fluids eine Betätigung der Greifeinrichtung ermöglicht.

Der Aktor ist hierbei als linear wirkender Fluidaktor ausgebildet, der einen ringförmigen, größenvariablen Arbeitsraum aufweist. Der Arbeitsraum wird von einer kreiszylindrischen Außenoberfläche eines Koppelkörpers, einem in radialer Richtung nach außen von der Außenoberfläche des Koppelkörpers abragenden und abdichtend mit dem Koppelkörper verbundenen Druckring, einem linearbeweglich abdichtend an der Außenoberfläche anliegenden Ringkolben und einem dem Ringkolben zugehörigen Hülsenabschnitt bestimmt, wobei der Druckring abdichtend an einer Innenoberfläche des Hülsenabschnitts anliegt.

Zur Aufnahme der Greifeinrichtung weist der Koppelkörper eine kreiszylindrische Aufnahmebohrung auf, in die ein korrespondierend geformter Bereich des Grundkörpers der Greifeinrichtung aufgenommen werden kann. Für eine axiale Verriegelung der Greifeinrichtung in der Greifaufnahme ist vorgesehen, dass an einer Innenoberfläche der Aufnahmebohrung wenigstens ein in radialer Richtung nach innen abragender, kreisringförmiger Verriegelungsvorsprung ausgebildet ist. Dieser Verriegelungsvorsprung bildet einen Hinterschnitt für eine Riegelnase, die am Grundkörper der Greifeinrichtung ausgebildet ist, wobei die Greifeinrichtung mit der Greifaufnahme in der Art eines Bajonettverschlusses durch eine kombinierte Linear- und Rotationsbewegung verriegelt werden kann. Für eine Übertragung einer Linearbewegung, die der Ringkolben mit dem daran angebrachten Hülsenabschnitt relativ zum Koppelkörper durchführen kann, ist der Hülsenabschnitt an einem dem Ringkolben abgewandten Endbereich mit zwei gegenüberliegend zueinander angeordneten Riegelklauen versehen. Die Riegelklauen dienen einer formschlüssigen Kopplung des Hülsenabschnitts mit dem Klemmkörper der Greifeinrichtung. Beispielhaft ist vorgesehen, dass der Klemmkörper zwei ringabschnittsförmige, in radialer Richtung nach außen abragende Vorsprünge aufweist, die zum Eingriff in korrespondierende, koaxial zur Mittelachse ausgerichtete Riegelnuten der Riegelklauen vorgesehen sind. Besonders bevorzugt ist vorgesehen, dass die Greifeinrichtung und die Greifaufnahme derart aufeinander angepasst sind, dass die Greifeinrichtung durch eine lineare Bewegung längs der Mittelachse in die Greifaufnahme eingesetzt werden kann und durch eine anschließende Rotationsbewegung um die Mittelachse sowohl eine Verriegelung des Grundkörpers mit dem Koppelkörper als auch eine Verriegelung des Klemmkörpers mit den Riegelklauen stattfindet.

Bei einer vorteilhaften Weiterbildung der Greifaufnahme ist vorgesehen, dass an einer der Riegelklauen ein quer zur Mittelachse linearbeweglicher Rastbolzen angeordnet ist, der in einer Verriegelungsstellung mit einem radial innenliegenden Riegelbereich in die Riegelnut eingreift und der in einer in radialer Richtung nach außen verlagerten Freigabestellung die Riegelnut freigibt.

Um während einer Nutzung des aus der Greifaufnahme und der Greifeinrichtung gebildeten Greifsystems eine unerwünschte Entriegelung der Greifeinrichtung von der Greifaufnahme zu verhindern ist rein exemplarisch vorgesehen, dass wenigstens einer der Riegelklauen ein Rastbolzen zugeordnet ist, der in einer Verriegelungsstellung mit einem Endbereich in die zugeordnete Riegelnut hineinragt und der in eine korrespondierende Radialbohrung einer der Vorsprünge eingreift und damit eine Rotationsbewegung der Greifeinrichtung gegenüber der Greifaufnahme verhindert.

Die Aufgabe der Erfindung wird auch durch ein Greifsystem mit einer erfindungsgemäßen Greifeinrichtung und einer erfindungsgemäßen Greifaufnahme gelöst.

Eine vorteilhafte Ausführungsform der Erfindung ist in der Zeichnung dargestellt. Hierbei zeigt:
- Figur 1: eine perspektivische Darstellung einer Greifeinrichtung,
- Figur 2: eine Seitenansicht der Greifeinrichtung gemäß der Figur 1,
- Figur 3: eine perspektivische Explosionsdarstellung der Greifeinrichtung gemäß den Figuren 1 und 2, bei der der Spannring sowohl im eingebauten Zustand als auch als Einzelteil dargestellt ist,
- Figur 4: eine ebene Schnittdarstellung der Greifeinrichtung gemäß den Figuren 1 bis 3 in einer Dosenfreigabestellung,
- Figur 5: eine ebene Schnittdarstellung der Greifeinrichtung gemäß den Figuren 1 bis 3 in einer Doseneinspannstellung, und
- Figur 6: eine perspektivische Schnittdarstellung einer Greifaufnahme.

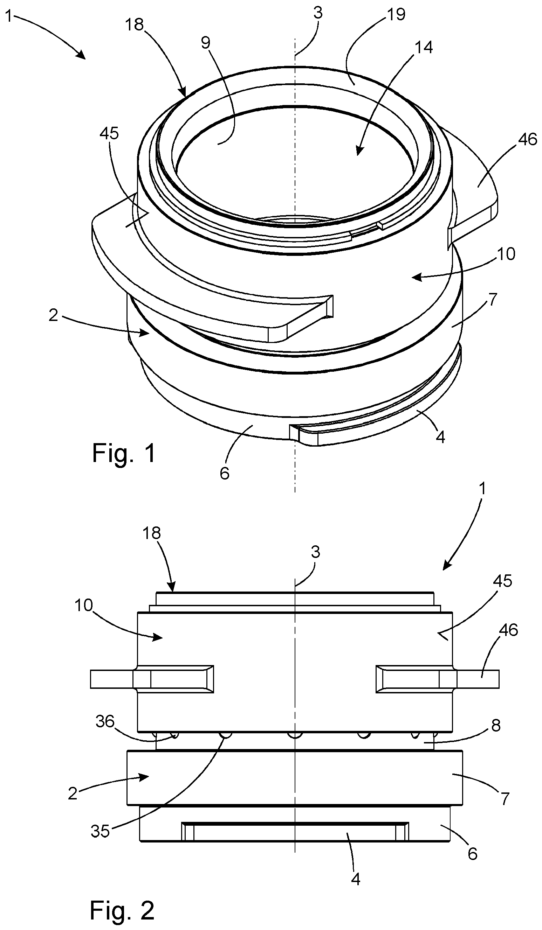

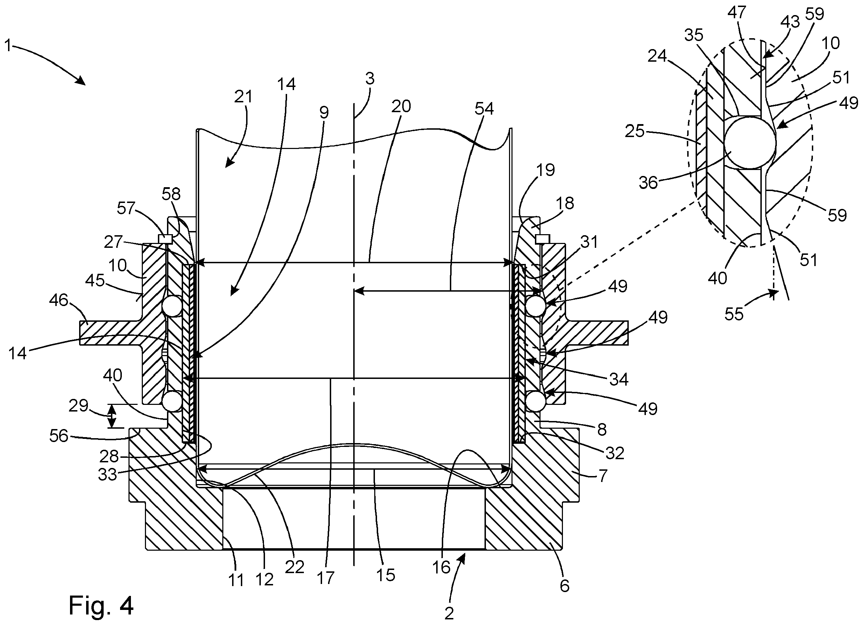

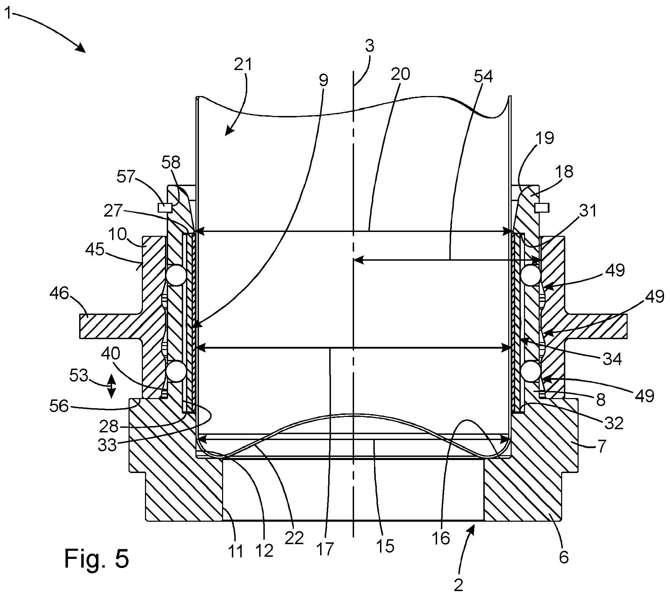

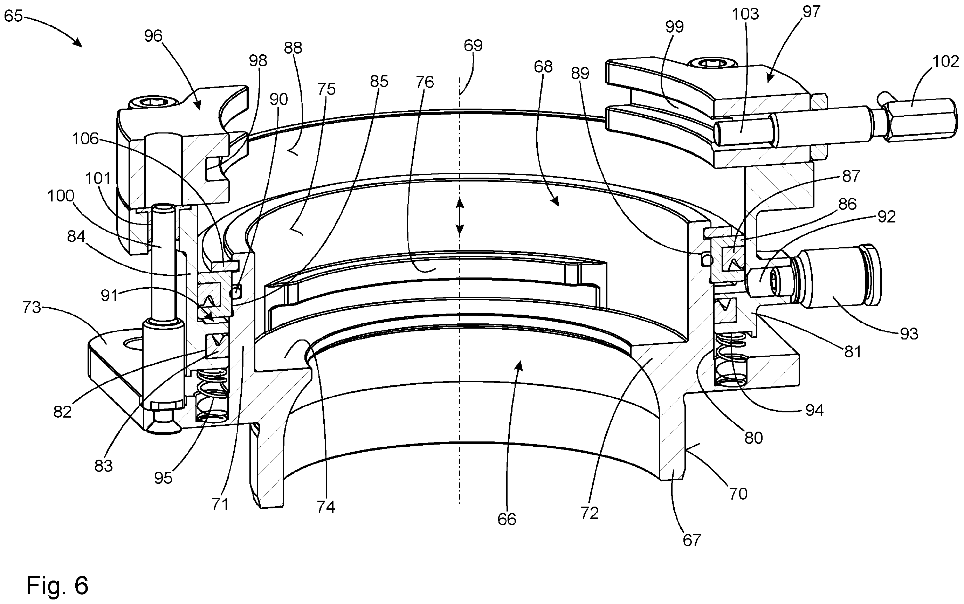

Eine in den Figuren 1 bis 5 in unterschiedlichen Darstellungen gezeigte Greifeinrichtung 1 ist zum Greifen von dünnwandigen Aerosoldosenrohlingen 21, wie sie rein exemplarisch in den Schnittdarstellungen der Figuren 4 und 5 gezeigt sind, ausgebildet. Ferner ist die Greifeinrichtung 1 für eine Festlegung in einer Greifaufnahme ausgebildet, wie sie in der Figur 6 dargestellt ist.

Die Greifeinrichtung 1 gemäß den Figuren 1 bis 5 umfasst einen Grundkörper 2, der rein exemplarisch mit Ausnahme von zwei spiegelsymmetrisch zu einer Mittelachse 3 angeordneten Riegelnasen 4 sowie mit Ausnahme von mehreren quer zur Mittelachse 3 ausgebildeten und auch als Querausnehmungen bezeichnete Ausnehmungen 35 rotationssymmetrisch zur Mittelachse 3 ausgebildet ist.

Wie den Darstellungen der Figuren 4 und 5 entnommen werden kann, wird der Grundkörper 2 beispielhaft durch einen ersten, unteren Ringabschnitt 6, durch einen zweiten, mittleren Ringabschnitt 7 sowie durch einen dritten, oberen Ringabschnitt 8 bestimmt. Dabei dienen der untere Ringabschnitt 6 sowie der mittlere Abschnitt 7 insbesondere der kraftübertragenden Kopplung mit der Greifaufnahme. Der obere Ringabschnitt 8 dient zur Aufnahme einer nachstehend näher beschriebenen Spannhülse 9 sowie zur linearbeweglichen Lagerung eines Klemmkörpers 10. Beispielhaft ist vorgesehen, dass der untere Ringabschnitt 6 von einer koaxial zur Mittelachse 3 ausgerichteten Längsbohrung 11 durchsetzt ist, die es beispielsweise ermöglicht, mit einem nicht dargestellten Bodenformstößel die plastische Deformation des in den Figuren 4 und 5 gezeigten Dosenbodens 22 zu bewirken. Der mittlere Ringabschnitt 7 ist hingegen mit einer Bohrung 12 versehen, die ebenfalls koaxial zur Mittelachse ausgerichtet ist und deren Durchmesser 15 einem Außendurchmesser des Aerosoldosenrohlings 21 entspricht. Eine Stirnfläche 16 der Bohrung 12 ist rein exemplarisch quer zur Mittelachse 3 ausgerichtet und liegt damit in einer nicht dargestellten Ebene, die ebenfalls quer zur Mittelachse 3 ausgerichtet ist. Damit bilden die Bohrung 12 und die Stirnfläche 16 einen Stützring für den Dosenboden 22 des Aerosoldosenrohlings 21, womit der Aerosoldosenrohling mit seinem stabilsten Bereich, nämlich dem Dosenboden 22, zuverlässig in der Greifeinrichtung zentriert aufgenommen und in axialer Richtung abgestützt ist.

Der obere Ringabschnitt 8 ist rein exemplarisch kreisringförmig ausgebildet und weist eine auch als Längsausnehmung bezeichnete Durchgangsbohrung 14 mit einem Innendurchmesser 17 auf, der größer als der Durchmesser 15 der Bohrung 12 und des Aerosoldosenrohlings 21 ist. An einem dem mittleren Ringabschnitt 7 abgewandten Endbereich des oberen Ringabschnittes 8 ist ein Zentrierring 18 angeordnet, der an seinem Innenumfang einen konusabschnittsförmig ausgebildeten Zentrierbereich 19 aufweist. Ein minimaler Durchmesser 20 des Zentrierbereichs 19 entspricht zumindest nahezu dem Durchmesser 15 der Bohrung 12 und des Aerosoldosenrohlings 21.

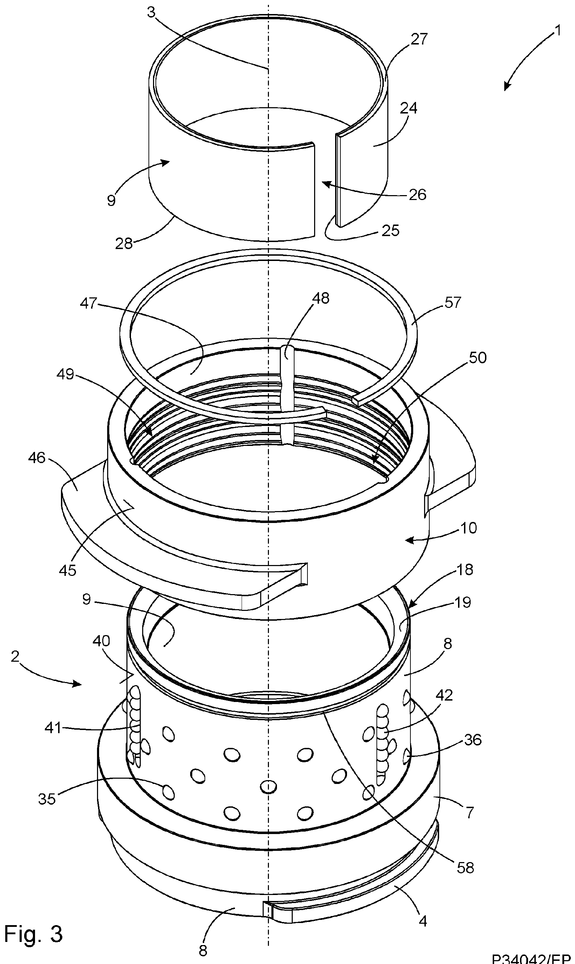

Eine ringförmige Unterseite 31 des Zentrierrings 18 und eine gegenüberliegend angeordnete, ringförmig ausgebildete axiale Stirnfläche 32, die zwischen dem mittleren Ringabschnitt 7 und dem oberen Ringabschnitt 8 ausgebildet ist, begrenzen jeweils in axialer Richtung einen Aufnahmeraum 34, der in radialer Richtung nach außen von einer Innenoberfläche 33 des oberen Ringabschnittes 8 begrenzt wird und der gemäß der Darstellung der Figuren 3 und 4 zur Aufnahme der Spannhülse 9 genutzt wird.

Der obere Ringabschnitt 8 ist ferner von einer Vielzahl von Ausnehmungen 35 durchsetzt, die jeweils quer zur Mittelachse ausgerichtet sind und die auch als Querbohrungen bezeichnet werden. Gemäß der Detaildarstellung der Figur 4 kann vorgesehen sein, dass die Ausnehmungen 35 in radialer Richtung nach innen verjüngt ausgebildet sind, so dass ein in der jeweiligen Ausnehmung 35 aufgenommener, rein exemplarisch kugelförmig ausgebildeter Druckkörper 36 nicht vollständig nach innen in den Aufnahmeraum 34 ausweichen kann. Dies ist insbesondere dann von Interesse, wenn zeitweilig keine Spannhülse 9 im Aufnahmeraum 34 vorhanden sein sollte, wie dies der Fall sein kann, wenn ein Austausch der Spannhülse 9 vorgenommen wird.

Eine kreiszylindrische Außenoberfläche 40 des oberen Ringabschnitts 8, die auch als Führungsoberfläche bezeichnet werden kann, dient zur linearbeweglichen Lagerung des Klemmkörpers 10. Der Klemmkörper 10 ist rein exemplarisch in der Art einer längs der Mittelachse 3 erstreckten, kreiszylindrischen Hülse ausgebildet. An einer Außenoberfläche 45 weist der Klemmkörper 10 rein exemplarisch zwei spiegelsymmetrisch zur Mittelachse 3 angeordnete und in radialer Richtung nach außen abragende Vorsprünge 46 auf, die für eine Krafteinleitung auf den Klemmkörper 10 ausgebildet sind, wie dies nachstehend im Zusammenhang mit der Greifaufnahme 65 gemäß der Figur 6 näher beschrieben wird. Für die linearbewegliche Lagerung des Klemmkörpers 10 sind an der Außenoberfläche 40 parallel zur Mittelachse 3 ausgerichtete Längsnuten 41 und an einer Innenoberfläche 47 des Klemmkörpers 10 ebenfalls parallel zur Mittelachse 3 ausgerichtete Längsnuten 48 ausgebildet, die zur Aufnahme von Wälzkörpern 42 ausgebildet sind. Beispielhaft sind die Wälzkörper 42 als Kugeln ausgebildet und geometrisch derart an die Längsnuten 41 und 48 angepasst, dass sie jeweils geringfügig über die Außenoberfläche 40 des Grundkörpers 2 und über die innenoberfläche 47 des Klemmkörpers 10 überstehen und somit einen in den Figuren 4 und 5 erkennbaren Lagerspalt 43 zwischen Grundkörper 2 und Klemmkörper 10 ausbilden. Die Anordnung der Längsnuten 41 und 48 sowie der Wälzkörper 42 gewährleistet somit eine reibungsarme Linearbeweglichkeit für den Klemmkörper 10 gegenüber dem Grundkörper 2 und die Beschränkung der Relativbeweglichkeit zwischen Klemmkörper 10 und Grundkörper 2 auf genau einen linearen Freiheitsgrad der Bewegung.

Weiterhin sind an der kreiszylindrischen Innenoberfläche 47 des Klemmkörpers 10 drei koaxial zur Mittelachse 3 umlaufende, mit einer in Umfangsrichtung konstanten Profilierung ausgebildete Profilnuten 49 vorgesehen. Jede der Profilnuten 49 bildet eine Steuerfläche 51 aus, die den Druckkörpern 36, die in den Ausnehmungen 35 des oberen Ringabschnitts 8 des Grundkörpers 2 aufgenommen sind, als Anlageflächen dienen. Die Steuerflächen 51 dienen in Verbindung mit den zugehörigen Druckkörpern 36 der Umsetzung der parallel zur Mittelachse 3 vorgesehenen Relativbewegung des Klemmkörpers 10 gegenüber dem Grundkörper 2 in jeweils radial ausgerichtete Stellbewegungen der Druckkörper 36 relativ zum oberen Ringabschnitt 8 des Grundkörpers 2. Durch diese Stellbewegungen der Druckkörper 36 wird eine Krafteinleitung auf die Spannhülse 9 ermöglicht, die hierbei eine elastische Deformation erfährt. In Abhängigkeit von der Bewegungsrichtung des Klemmkörpers 10 relativ zum Grundkörper 2 findet hierbei entweder eine Verkleinerung oder eine Vergrößerung eines freien Querschnitts statt, den die Spannhülse 9 aufweist. Dementsprechend kann hierdurch eine Festlegung oder Freigabe eines Aerosoldosenrohlings 21 in der Greifeinrichtung 1 erzielt werden.

Um die gewünschte Bewegungsumsetzung zwischen einer Relativbewegung des Klemmkörpers 10 gegenüber dem Grundkörper 2 in Radialbewegungen der Druckkörper 36 zu ermöglichen, sind die Steuerflächen 51 derart ausgebildet, dass sie längs eines Klemmweges 53, der vorliegend aufgrund der linearbeweglichen Lagerung des Klemmkörpers 10 am Grundkörper 2 parallel zur Mittelachse 3 ausgerichtet ist, einen abnehmenden Abstand 54 zur Mittelachse aufweisen. Hierdurch wird bewirkt, dass bei einer Relativbewegung des Klemmkörpers 10 gegenüber dem Grundkörper 2 aus der Freigabestellung in die Klemmstellung längs des Klemmweges 53 die gewünschte Zustellbewegung für die Spannhülse 9 aufgrund der Radialbewegungen der Druckkörper 36 erfolgt. Bei einer Relativbewegung des Klemmkörpers 10 gegenüber dem Grundkörper 2 in entgegengesetzter Richtung, also aus der Klemmstellung in die Freigabestellung ermöglicht der hierbei zunehmende Abstand der Steuerflächen 51 eine radiale Bewegung der Druckkörper 36 nach außen, so dass die Spannhülse 9 die Möglichkeit erhält, sich in radialer Richtung in eine Stellung zu verformen, in der sie geringere innere Spannungen aufweist, wodurch die gewünschte Freigabe des Aerosoldosenrohlings 21 hervorgerufen werden kann.

Bei der Ausführungsform einer Greifeinrichtung 1 gemäß den Figuren 1 bis 5 ist rein exemplarisch vorgesehen, dass die Steuerflächen zumindest bereichsweise kegelmantelabschnittsförmig ausgebildet sind und mit der Mittelachse 3 einen spitzen Winkel 55 einnehmen.

Beispielhaft ist vorgesehen, dass die Profilnuten 49 derart dimensioniert sind, dass bei der Relativbewegung des Klemmkörpers 10 gegenüber dem Grundkörper 2 aus der Freigabestellung in die Klemmstellung jeweils zylindrische Abschnitte 59 der Innenoberfläche 47 des Klemmkörpers 10 in Kontakt mit den Druckkörpern 36 gelangen können. In der Klemmstellung führen somit Bearbeitungskräfte, die auf den Aerosoldosenrohling 21 einwirken und die als radial nach außen gerichtete Kräfte über die Spannhülse 9 und die Druckkörper 36 in den Klemmkörper 10 eingeleitet werden, zu einer rein radialen Krafteinwirkung auf den Klemmkörper 10. Hiermit werden unerwünschte axiale Reaktionskräfte, die gegebenenfalls zu einer selbsttätigen Entriegelung des Klemmkörpers 10 und einer damit einhergehenden, ebenfalls nicht erwünschten Freigabe des Aerosoldosenrohlings 21 führen könnten, vermieden. Vielmehr wird durch diese geometrische Gestaltung der Innenoberfläche 47 des Klemmkörpers 10 in der Klemmstellung die gewünschte Selbsthemmung erzielt. Für die Gewährleistung der Selbsthemmung ist es nicht zwingend notwendig, dass die Druckkörper 36 in der Klemmstellung an einem parallel zur Mittelachse 3 ausgerichteten Oberflächenabschnitt der Innenoberfläche 47 anliegen. Dieser Oberflächenabschnitt der Innenoberfläche 47 kann auch in einem spitzen Winkel 55 zur Mittelachse 3 ausgerichtet sein, allerdings ist hierbei eine Berücksichtigung der Reibungsverhältnisse zwischen Druckkörper 36 und Innenoberfläche 47 erforderlich.

Um eine Begrenzung der linearen Relativbewegung des Klemmkörpers 10 gegenüber dem Grundkörper 2 zu gewährleisten, ist am Übergang zwischen dem oberen Ringabschnitt 8 und dem mittleren Ringabschnitt 7 ein in radialer Richtung nach außen abragender umlaufender Vorsprung 56 vorgesehen. Ferner ist endseitig am oberen Ringabschnitt 8 ein Wellensicherungsring 57 in einer umlaufenden Nut 58 aufgenommen, der die Bewegung des Klemmkörpers 10 begrenzt.

Beispielhaft ist vorgesehen, dass die Spannhülse 9, die in der Figur 3 oberhalb der übrigen Komponenten der Greifeinrichtung 1 nochmals zusätzlich dargestellt ist, einen kreiszylindrischen und längs der Mittelachse 3 erstreckten Hülsenkörper 24 aufweist. Der Hülsenkörper 24 ist rein exemplarisch aus einem federelastischen, dünnwandigen Metallband hergestellt und an einer Innenseite mit einer Kunststoffbeschichtung 25 versehen. Die Kunststoffbeschichtung 25 dient zur definierten Anpassung, insbesondere zur Erhöhung, der Reibung zwischen dem Aerosoldosenrohling 21 und dem Hülsenkörper 24. Ferner ist vorgesehen, dass der Hülsenkörper 24 mit einem rein exemplarisch parallel zur Mittelachse 3 erstreckten Längsschlitz 26 versehen ist. Dieser Längsschlitz 26 erstreckt sich über die gesamte Längenausdehnung des Hülsenkörpers 24 zwischen einer oberen Stirnseite 27 und einer unteren Stirnseite 28.

Bei einer nicht näher dargestellten Ausführungsform der Spannhülse verläuft der Längsschlitz schräg zur Mittelachse oder ist bereichsweise gekrümmt, insbesondere mäanderförmig, ausgebildet.

Für die Greifeinrichtung 1 ist vorgesehen, dass die Spannhülse 9 eine Dosenfreigabestellung einnimmt, wenn ein Abstand 29 zwischen dem Klemmkörper 10 und dem mittleren Ringabschnitt 7 maximal ist, wie dies in der Figur 4 gezeigt ist.

Bei einer Reduzierung des Abstands 29, also einer Bewegung des Klemmkörpers 10 längs des Klemmweges 53 werden aufgrund der kegelabschnittsförmigen Gestaltung der Steuerflächen 51 die Druckkörper 36 in radialer Richtung nach innen bewegt und führen zu einer radialen Krafteinwirkung auf die Spannhülse 9. Die Spannhülse 9 wird dabei aus der Dosenfreigabestellung gemäß der Figur 4 in die Doseneinspannstellung gemäß der Figur 5 elastisch deformiert, so dass ein in der Greifeinrichtung 1 aufgenommener Aerosoldosenrohling 21 kraftschlüssig festgelegt wird. Vorzugsweise sind ein Außendurchmesser des Aerosoldosenrohlings 21, eine Dimensionierung der Spannhülse 9 sowie die Steuerflächen 51 des Klemmkörpers 10 derart aufeinander abgestimmt, dass eine maximale Klemmkraft für den Aerosoldosenrohling 21 bereits dann erreicht ist, wenn der Abstand 29 zwischen dem Klemmkörper 10 und dem mittleren Ringabschnitt 7 noch nicht vollständig verschwindet. Für den Rest des Klemmweges 53 treten die kreiszylindrisch ausgebildeten Abschnitte 59 der Innenoberfläche 47 des Klemmkörpers 10 in Kontakt mit den Druckkörpern 36 und gewährleisten hiermit die Selbsthemmung in der Klemmstellung des Klemmkörpers 10, die mit der Doseneinspannstellung für die Spannhülse 9 identisch ist.

Eine Freigabe des Aerosoldosenrohlings 21 erfolgt durch eine Verlagerung des Klemmkörpers 10 aus der Klemmstellung gemäß der Figur 5 in die Freigabestellung gemäß der Figur 4. Hierbei wird angenommen, dass eine innere Vorspannung der Spannhülse 9 ausreichend groß ist, um die Druckkörper 36 in radialer Richtung nach außen gegen die jeweilige Steuerfläche 51 zu drängen und damit in der Dosenfreigabestellung einen freien Querschnitt zur Verfügung zu stellen, der ein reibungsarmes axiales Entnehmen des Aerosoldosenrohlings 21 aus der Greifeinrichtung 1 ermöglicht.

Für eine Festlegung und Betätigung der Greifeinrichtung 1 ist eine in der Figur 6 näher dargestellte Greifaufnahme 65 vorgesehen. Die Greifaufnahme 65 gewährleistet insbesondere die Kopplung der Greifeinrichtung 1 mit einem nicht dargestellten Werkstücktisch, insbesondere einem Werkstückrundtisch einer Einziehmaschine. Hierzu umfasst die Greifaufnahme 65 einen Koppelkörper 66, der einen Koppelabschnitt 67 und einen Aufnahmeabschnitt 68 aufweist. Beispielhaft ist vorgesehen, dass der Koppelabschnitt 67 rotationssymmetrisch zu einer Längsachse 69 ausgebildet ist, die die Mittelachse für die Greifaufnahme 65 bildet. Der Koppelabschnitt 67 kann beispielsweise mit einer präzise hergestellten, kreiszylindrischen Außenoberfläche 70 in einer nicht dargestellten Ausnehmung eines Werkstücktischs aufgenommen werden und dort in nicht näher dargestellter Weise verriegelt werden. Beispielhaft ist vorgesehen, dass der an den Koppelabschnitt 67 angrenzende Aufnahmeabschnitt 68 einstückig mit dem Koppelabschnitt 67 ausgebildet ist und eine kreisringförmige Aufnahmehülse 71 umfasst, die an einem dem Koppelabschnitt 67 zugewandten Endbereich mit einem rotationssymmetrisch ausgebildeten, radial nach innen abragenden Ringteil 72 sowie mit einer radial nach außen abragenden Flanschplatte 73 versehen ist. Dabei bildet eine ringförmige Stirnfläche 74 des Ringteils 72 eine axiale Anschlagfläche für den unteren Ringabschnitt 6 der Greifeinrichtung 1, womit eine axiale Positionierung der Greifeinrichtung 1 gegenüber der Greifaufnahme 65 gewährleistet wird.

An einer Innenfläche 75 des Aufnahmeabschnitts 68 ist ein ringabschnittsförmig ausgebildeter Vorsprung 76 vorgesehen, der beabstandet zur Stirnfläche 74 angeordnet ist und der als Hinterschnitt für die Aufnahme einer der Riegelnasen 4 der Greifeinrichtung 1 ausgebildet ist. Beispielhaft ist vorgesehen, dass an der Innenfläche 75 zwei spiegelsymmetrisch zur Längsachse 69 angeordnete Vorsprünge 76 ausgebildet sind.

An einer kreiszylindrisch ausgebildeten Außenoberfläche 80 des Aufnahmeabschnitts 68 liegt ein längs der Längsachse linearbeweglicher Ringkolben 81 abdichtend an. Der Ringkolben 81 weist hierzu einen, in einer radial nach innen gerichteten Umfangsnut 82 aufgenommenen, Dichtring 83 auf. Ferner umfasst der Ringkolben 81 einen koaxial zur Längsachse und in axialer Richtung erstreckten Hülsenabschnitt 84 auf, der rein exemplarisch einen kreisringförmigen Querschnitt aufweist.

In axialer Richtung angrenzend an die Außenoberfläche 80 ist am Aufnahmeabschnitt 68 ein kreiszylindrischer Ringabschnitt 85 ausgebildet, der einen kleineren Durchmesser als die Außenoberfläche 80 aufweist und an dem ein Druckring 86 abdichtend angebracht ist. Der mit einem Sicherungsring 106 in axialer Richtung gesicherte Druckring 86 weist eine in radialer Richtung nach außen offene, U-förmige Profilierung auf. In dieser Profilierung ist ein Dichtring 87 aufgenommen, der für eine abdichtende Anlage an einer Innenoberfläche 88 des Hülsenabschnitts 84 ausgebildet ist. Ferner ist der Ringabschnitt 85 mit einer umlaufenden Nut 89 versehen, in der ein O-Ring 90 aufgenommen ist, der eine Abdichtung des Druckrings 86 gegenüber dem Ringabschnitt 85 gewährleistet. Hierdurch bilden der Ringkolben 81 mit dem einstückig angeformten Hülsenabschnitt 84 zusammen mit dem Druckring 86 und der Außenoberfläche 80 des Aufnahmeabschnitts 68 einen Druckraum 91, der über einen Fluidkanal 92 mit einem Schlauchanschluss 93 fluidisch kommunizierend verbunden ist. Am Schlauchanschluss 93 kann in nicht näher dargestellter Weise ein Fluidschlauch zur Verbindung des Druckraums 91 mit einer nicht dargestellten Ventilanordnung angeschlossen werden, wobei die nicht dargestellte Ventilanordnung wahlweise eine Bereitstellung von druckbeaufschlagtem Fluid, insbesondere Druckluft, oder eine Abfuhr des druckbeaufschlagten Fluids in den bzw. aus dem Druckraum 91 ermöglicht.

Hierdurch wird eine lineare Verlagerung des Ringkolbens 81 mit dem daran einstückig angeformten Hülsenabschnitt 84 längs der Längsachse 69 ermöglicht. Beispielhaft ist vorgesehen, dass an einer dem Hülsenabschnitt 84 abgewandten Unterseite 94 des Ringkolbens 81 mehrere, vorzugsweise in gleicher Teilung über den Umfang des Ringkolbens 81 verteilte Druckfedern 95 an der Flanschplatte 73 abgestützt sind, die den Ringkolben 81 in eine an den Druckring 86 angenäherte Vorzugsstellung drücken. Bei Bereitstellung eines druckbeaufschlagten Fluids in den Druckraum 91 erfolgt bei Überschreiten eines Mindestdrucks, der von den vorherrschenden Reibungsverhältnissen sowie von der inneren Vorspannung der Druckfedern 95 abhängig ist, eine Verlagerung des Ringkolbens 81 mit dem daran angebrachten Hülsenabschnitt 84 in Richtung der Flanschplatte 73, wobei hierdurch die Druckfedern 95 komprimiert werden und eine innere Spannung der Druckfedern 95 erhöht wird. Durch diese Verlagerung werden die endseitig am Hülsenabschnitt 84 angebrachten, jeweils kreisringabschnittsförmig ausgebildeten Riegelklauen 96, 97 in Richtung der Flanschplatte 73 bewegt, die für eine formschlüssige Kopplung mit den Vorsprüngen 46 des Klemmkörpers 10 ausgebildet sind. Sofern also eine Greifeinrichtung 1 an der Greifaufnahme 65 aufgenommen ist und die Vorsprünge 46 in den Riegelnuten 98, 99 in axialer Richtung formschlüssig verriegelt sind, kann somit eine Betätigung des Klemmkörpers 10 zur Durchführung einer Relativbewegung gegenüber dem Grundkörper 2 der Greifeinrichtung 1 bewirkt werden.

Um eine unerwünschte Rotation des Ringkolbens 81 gegenüber dem Koppelkörper 66 zu verhindern ist dem Koppelkörper 66 ein Führungsbolzen 100 zugeordnet der in eine korrespondierende Führungsausnehmung 101 der Riegelklaue 96 eingreift.

Ferner ist zur rotatorischen Festlegung der Greifeinrichtung 1 in der Greifaufnahme 65 ein in radialer Richtung nach innen abragender, kreisringförmiger Verriegelungsvorsprung 103 eines Riegelbolzens 102 zur Verriegelung der Greifeinrichtung 1 ausgebildet, der für einen formschlüssigen Eingriff in eine nicht näher dargestellte Ausnehmung am Vorsprung 46 des Klemmkörpers 10 vorgesehen ist und der in nicht näher dargestellter Weise von einer Federeinrichtung in der Verriegelungsstellung gemäß der Figur 6 gehalten wird. Um eine Entriegelung der Greifeinrichtung 1 aus der Greifaufnahme 65 zu ermöglichen ist ferner vorgesehen, dass der Riegelbolzen 102 von einem nicht dargestellten Benutzer in radialer Richtung nach außen gezogen werden kann, wodurch die Verdrehsicherung zwischen der Greifeinrichtung 1 und der Greifaufnahme 65 aufgehoben wird und die Greifeinrichtung 1 durch eine Rotation um ca. 90 Grad um die Mittelachse 3 sowohl im Hinblick auf die Vorsprünge 46 des Klemmkörpers 10 als auch im Hinblick auf die Riegelnasen 4 außer Eingriff mit den Vorsprüngen 76 bzw. den Riegelklauen 96, 97 gebracht werden kann.

## Patentansprüche

1. Greifeinrichtung (1) zum Greifen von dünnwandigen Aerosoldosenrohlingen (21), mit einem Grundkörper (2), der längs einer Mittelachse (3) von einer zylindrischen, insbesondere kreiszylindrischen, Ausnehmung (14) durchsetzt ist, sowie mit einer in der Ausnehmung (14) aufgenommenen und längs der Mittelachse (3) erstreckten Spannhülse (9), die in einer quer zur Mittelachse (3) ausgerichteten Radialrichtung zwischen einer Dosenfreigabestellung und einer Doseneinspannstellung elastisch deformierbar ausgebildet ist, mit einem Klemmkörper (10), der entlang eines Klemmweges (53) zwischen einer Freigabestellung und einer Klemmstellung beweglich an einer Führungsoberfläche (40) des Grundkörpers (2) gelagert ist und der an einer Innenoberfläche (47) mit wenigstens einer Steuerfläche (51) versehen ist, die längs des Klemmweges (53) in der Richtung der Klemmstellung einen abnehmenden Abstand (54) zur Mittelachse (3) aufweist, wobei der Grundkörper (2) von mehreren quer zur Mittelachse (3) ausgerichteten Ausnehmungen (35) durchsetzt ist, in denen jeweils ein Druckkörper (36) angeordnet ist, der jeweils an der Steuerfläche (51) und an einer Au-ßenoberfläche der Spannhülse (9) anliegt.

2. Greifeinrichtung (1) nach Anspruch 1, **dadurch gekennzeichnet, dass** der Klemmkörper (10) längs der Mittelachse (3) linearbeweglich am Grundkörper (2) gelagert ist und dass der Klemmweg (53) parallel zur Mittelachse (3) ausgerichtet ist.

3. Greifeinrichtung (1) nach Anspruch 1 oder 2, **dadurch gekennzeichnet, dass** der Klemmkörper (10) drehbeweglich um die Mittelachse am Grundkörper (2) gelagert ist und dass der Klemmweg einen koaxial zur Mittelachse ausgerichteten Kreisbogenabschnitt umfasst, insbesondere als koaxial zur Mittelachse ausgerichteter Kreisbogenabschnitt ausgebildet ist.

4. Greifeinrichtung (1) nach Anspruch 1 oder 2, **dadurch gekennzeichnet, dass** die Steuerfläche (51) als zumindest teilweise um die Mittelachse (3) umlaufender Abschnitt eines Kegelmantels ausgebildet ist.

5. Greifeinrichtung (1) nach einem der Ansprüche 1 bis 4, **dadurch gekennzeichnet, dass** ein Winkel (55) zwischen der Steuerfläche (51) und dem Klemmweg (53) derart gewählt ist, dass für radial nach außen auf die Druckkörper (36) wirkende Kräfte bezüglich des Klemmkörpers (10) Selbsthemmung vorliegt.

6. Greifeinrichtung (1) nach einem der vorhergehenden Ansprüche, **dadurch gekennzeichnet, dass** mehrere, insbesondere gleichartig ausgebildete, Steuerflächen (51) in axialer Richtung beabstandet längs der Mittelachse (3) an der Innenoberfläche (47) des Klemmkörpers (10) angeordnet sind.

7. Greifeinrichtung (1) nach einem der vorhergehenden Ansprüche, **dadurch gekennzeichnet, dass** die Spannhülse (9) aus einem federelastischen, insbesondere innenseitig mit Kunststoff (25) beschichteten, Metallmaterial (24) hergestellt ist und von einem Schlitz (26) durchsetzt ist, der sich, insbesondere parallel zur Mittelachse (3), von einer ersten axialen Stirnfläche (27) der Spannhülse (9) zu einer zweiten axialen Stirnfläche (28) der Spannhülse (9) erstreckt.

8. Greifeinrichtung (1) nach einem der vorhergehenden Ansprüche, **dadurch gekennzeichnet, dass** ein Außendurchmesser der Spannhülse (9) größer als ein Innendurchmesser der zylindrischen Ausnehmung (14) des Grundkörpers (2) ist, so dass die Spannhülse (9) mit einer inneren Radialvorspannung in der zylindrischen Ausnehmung (14) des Grundkörpers (2) aufgenommen ist.

9. Greifeinrichtung (1) nach einem der vorhergehenden Ansprüche, **dadurch gekennzeichnet, dass** die Druckkörper (36) kugelförmig ausgebildet sind und dass die quer zur Mittelachse (3) ausgerichteten Ausnehmungen (35) im Grundkörper (2) in einem radial innenliegenden Bereich einen kleineren Durchmesser als die Druckkörper (36) aufweisen.

10. Greifeinrichtung (1) nach einem der vorhergehenden Ansprüche, **dadurch gekennzeichnet, dass** an der Innenoberfläche (47) des Klemmkörpers (10) und an der Führungsoberfläche (40) des Grundkörpers (2) mehrere jeweils längs des Klemmweges (53) erstreckte und zueinander korrespondierende Führungsnuten (41, 48) ausgebildet sind, in denen Wälzkörper (42) aufgenommen sind, um eine, insbesondere drehfeste, Wälzlagerung zwischen dem Klemmkörper (10) und dem Grundkörper (2) auszubilden.

11. Greifeinrichtung (1) nach einem der vorhergehenden Ansprüche, **dadurch gekennzeichnet, dass** der Grundkörper (2) an einem ersten Endbereich einen, insbesondere frei drehbar in der Ausnehmung gelagerten, Stützring aufweist, der einen ersten Ringabschnitt mit einem ersten Innendurchmesser aufweist, wobei der erste Innendurchmesser einem Außendurchmesser des zu greifenden Aerosoldosenrohlings entspricht und der einen zweiten Ringabschnitt mit einem zweiten Innendurchmesser aufweist, der kleiner als der erste Innendurchmesser ist.

12. Greifeinrichtung (1) nach einem der vorhergehenden Ansprüche, **dadurch gekennzeichnet, dass** der Grundkörper (2) an einem zweiten Endbereich einen Zentrierring (18) aufweist, der längs der Mittelachse (3) kegelabschnittsförmig verjüngt ausgebildet ist und der angrenzend an die Ausnehmung (14) einen minimalen Innendurchmesser (20) aufweist, der zumindest im Wesentlichen einem Außendurchmesser des zu greifenden Aerosoldosenrohlings (21) entspricht.

13. Greifaufnahme (65) zur Kopplung mit einer, insbesondere nach einem der vorhergehenden Ansprüche ausgebildeten, Greifeinrichtung (1), mit einem Koppelkörper (66), der zur Kopplung mit einem Werkstückrundtisch ausgebildet ist und der eine koaxial zu einer Mittelachse (69) ausgebildete kreiszylindrische Außenoberfläche (80) aufweist, an der ein längs der Mittelachse (69) linearbeweglicher Ringkolben (81) abdichtend anliegt, der mit einem koaxial zur Mittelachse (69) und axial von der Außenoberfläche (80) entfernt angeordneten Hülsenabschnitt (84) verbunden ist und der mit einem am Koppelkörper (66) festgelegten und abdichtend an einer Innenoberfläche (88) des Hülsenabschnitts (84) anliegenden Druckring (86) einen größenvariablen Arbeitsraum (91) bestimmt, wobei an einem dem Ringkolben (81) abgewandten Endbereich des Hülsenabschnitts (84) wenigstens zwei gegenüberliegend angeordnete Riegelklauen (96, 97) angeordnet sind, die jeweils mit einer umlaufenden, koaxial zur Mittelachse ausgerichteten Riegelnut (98, 99) versehen sind, wobei der Koppelkörper (66) von einer längs der Mittelachse (69) erstreckten, kreiszylindrischen Aufnahmebohrung (68) durchsetzt ist, die zur Aufnahme eines Abschnitts der Greifeinrichtung (1) ausgebildet ist, wobei an einer Innenoberfläche (75) der Aufnahmebohrung (68) wenigstens ein in radialer Richtung nach innen abragender, kreisringförmiger Verriegelungsvorsprung (76) zur Verriegelung der Greifeinrichtung (1) ausgebildet ist.

14. Greifaufnahme (65) nach Anspruch 13, **dadurch gekennzeichnet, dass** an einer der Riegelklauen (96, 97) ein quer zur Mittelachse (69) linearbeweglicher Rastbolzen (102) angeordnet ist, der in einer Verriegelungsstellung mit einem radial innenliegenden Riegelbereich (103) in die Riegelnut (99) eingreift und der in einer in radialer Richtung nach außen verlagerten Freigabestellung die Riegelnut (99) freigibt.

15. Greifsystem mit einer Greifeinrichtung (1) nach einem der Ansprüche 1 bis 12 und einer Greifaufnahme (65) nach einem der Ansprüche 13 oder 14.
